# FASCICULE DE BREVET EUROPEEN

(11) **EP 3 362 873 B1**
(45) Date de publication et mention de la délivrance du brevet: **01.06.2022**
(21) Numéro de dépôt: 16782214.7
(22) Date de dépôt: 13.10.2016
(51) Int. Cl.: G06F 3/01

(54) **MODULE D'INTERFACE TACTILE ET PROCÉDÉ DE GÉNÉRATION D'UN RETOUR HAPTIQUE**
TAKTILES SCHNITTSTELLENMODUL UND VERFAHREN ZUR ERZEUGUNG EINER HAPTISCHEN RÜCKMELDUNG
TACTILE INTERFACE MODULE AND METHOD FOR GENERATING HAPTIC FEEDBACK

(30) Priorité: 13.10.2015 FR 1559741
(43) Date de publication de la demande: 22.08.2018
(73) Titulaire: DAV, 94046 Creteil Cedex (FR)
(72) Inventeur: EL-OUARDI, Nour-Eddine, 94046 Créteil Cedex (FR); AUBRY, Anthony, 94046 Créteil Cedex (FR)
(74) Mandataire: Delplanque, Arnaud
(86) Numéro de dépôt international: PCT/EP2016/074640
(87) Numéro de publication internationale: WO 2017/064219

(56) Documents cités:
- EP-A2- 2 772 832
- WO-A1-2010/085575
- WO-A1-2015/136923
- FR-A1- 2 927 709
- US-A1- 2008 198 139

## Description

La présente invention concerne un module d'interface tactile et un procédé de génération d'un retour haptique pour transmettre un retour haptique à un utilisateur.

Dans le domaine automobile, des modules de commande multifonction, réalisés par exemple sous la forme d'un joystick ou d'un bouton rotatif, sont de plus en plus utilisés pour commander des systèmes électriques ou électroniques, tels qu'un système de climatisation, un système audio ou encore un système de navigation.

De tels modules peuvent être associés à un écran d'affichage et permettre une navigation dans des menus déroulants comportant différentes commandes relatives aux systèmes à commander.

Cependant, la présence de fonctions de plus en plus nombreuses et complexes entraîne une multiplication de ces modules. Aussi, pour augmenter le nombre de fonctions intégrées et améliorer l'ergonomie des interfaces homme-machine, l'utilisation d'un module d'interface à surface tactile, au niveau d'une surface de commande ou bien d'un écran tactile, est considérée comme un développement intéressant.

Lorsqu'un utilisateur exerce une pression sur la surface tactile d'un tel capteur, on peut mesurer la pression ou la force appliquée et/ou déterminer la localisation de l'endroit où la pression ou la force est exercée. Dans ce cas, un appui de l'utilisateur est par exemple associé à la sélection d'une commande.

En outre, pour signaler à l'utilisateur que sa commande a bien été prise en compte, que cela soit en situation normale de conduite ou d'arrêt mais également en situation dégradée (manipulation en aveugle, charge cognitive importante), il est important que l'utilisateur ait un retour haptique de manière à rester concentré sur la route en diminuant l'effort cognitif associé à la vérification de la réalisation de son action sur la surface tactile.

Pour cela, on connaît déjà des modules de commande à retour haptique comportant des actionneurs, tels que des actionneurs électromagnétiques, reliés au module d'interface pour transmettre un mouvement de vibration, de manière que l'utilisateur perçoive un retour haptique l'informant que sa commande a bien été prise en compte.

Ces actionneurs électromagnétiques comportent un stator portant un électroaimant et un noyau mobile portant un ou plusieurs aimants permanents qui peut se déplacer en translation par rapport au stator. En alimentant l'électroaimant du stator, on met le noyau mobile en mouvement et ce mouvement est transmis à la surface tactile.

Un second montage, appelé "voice-coil" ou "bobine acoustique" en français puisqu'associé au principe technique des haut-parleurs, s'obtient en montant à l'inverse l'électroaimant mobile par rapport à un ou plusieurs aimants permanents fixes.

On connaît en particulier un tel actionneur de module d'interface tactile à retour haptique de la Demanderesse, cf. FR2927709 Al. Le module d'interface comprend une surface tactile apte à détecter un appui d'un utilisateur et un actionneur fixé à la surface tactile. L'actionneur comporte :
- un châssis,
- un noyau mobile coopérant avec le châssis, destiné à être entraîné en mouvement entre des positions extrémales pour générer le retour haptique, et
- un stator présentant un électroaimant et configuré pour pouvoir entraîner le noyau mobile selon un mouvement de translation de va et vient.

Par un effet inertiel, la mise en mouvement du noyau mobile par le stator se transmet au châssis qui transmet à son tour le mouvement de vibration à une surface tactile à laquelle l'actionneur est fixé.

Au repos, le noyau mobile se trouve dans une position de repos flottante, maintenu par des ressorts.

Une fois l'électroaimant alimenté par des signaux alternatifs, l'amplitude de déplacement en translation selon des mouvements de va et vient du noyau augmente jusqu'à atteindre un maximum et puis, on arrête l'alimentation de l'électroaimant.

Cependant, même si l'alimentation de l'électroaimant est arrêtée, les ondes mécaniques induites continuent de se propager sur la surface tactile et les vibrations s'évanouissent seulement progressivement.

Des études de la Demanderesse ont montré que la durée des vibrations évanescentes peut atteindre 20ms et que ces vibrations peuvent rester assez longtemps perceptibles par un utilisateur.

Ceci peut être gênant s'il faut transmettre à l'utilisateur des retours haptiques qui se succèdent rapidement avec des intervalles de temps très brefs, notamment inférieurs à 20ms.

De plus, il s'est avéré qu'un retour haptique franc et percutant est mieux perçu par un utilisateur qu'un retour haptique qui s'étale dans le temps. Les documents WO2010085575 A1, US2008198139 A1, EP2772832 A2 et WO2015136923 A1 décrivent des dispositifs de commande à retour haptique comprenant des moyens afin d'atténuer les ondes mécaniques.

L'invention vise à pallier au moins partiellement aux inconvénients ci-dessus, en proposant notamment un module d'interface tactile à retour haptique avec un ressenti haptique amélioré, en particulier plus franc.

À cet effet, l'invention a pour objet un module d'interface tactile à retour haptique selon la revendication 1.

Ledit module d'interface tactile à retour haptique peut en outre présenter une ou plusieurs des caractéristiques suivantes, prises seules ou en combinaison.

Selon un aspect, l'unité de traitement et de commande est configurée de manière à activer l'actionneur de retour haptique dans un second temps de façon à générer plusieurs impulsions mécaniques déphasées par rapport à l'onde mécanique afin d'atténuer cette onde mécanique.

On peut prévoir qu'au moins un signal de commande envoyé par l'unité de traitement et de commande pour activer l'actionneur et générer une impulsion mécanique déphasée est plus court qu'un signal de commande envoyé par l'unité de traitement et de commande pour activer l'actionneur pour induire au moins une onde mécanique se propageant sur la surface tactile apte à être ressenti comme un retour haptique.

Selon un aspect, le signal de commande d'activation de l'actionneur permettant de générer une impulsion mécanique déphasée est un signal isolé.

Selon un autre aspect, les signaux successifs de commande d'activation de l'actionneur permettant de générer une succession d'impulsions mécaniques déphasées sont polarisés de façon opposée en alternance.

Selon encore un autre aspect, l'énergie des impulsions mécaniques déphasées décroît.

Ladite au moins une impulsion mécanique déphasée est notamment en opposition de phase par rapport à l'onde mécanique.

L'élément élastique peut être dimensionné de manière qu'à l'état non alimenté de l'électroaimant, le noyau mobile applique une force d'appui en direction de la paroi de contact et qu'à l'état alimenté de l'électroaimant selon une polarisation prédéfinie, le noyau mobile s'écarte de la paroi de contact.

La raideur de ressort dudit amortisseur est entre 7,5 et 12,5 fois, notamment 10 fois plus grande que la raideur de ressort dudit élément élastique.

Ledit amortisseur est par exemple réalisé sous forme d'une couche d'un élastomère, en particulier en silicone.

Selon un autre aspect, l'amortisseur possède une dureté comprise entre 25 et 35, en particulier 30 shore A.

L'invention concerne également un procédé de génération d'un retour haptique dans un module d'interface tactile à retour haptique comprenant une surface tactile apte à détecter un appui d'un utilisateur tel que défini ci-dessus, caractérisé en ce qu'il comporte les étapes selon lesquelles :
- selon une première étape, on induit au moins une onde mécanique se propageant sur la surface tactile apte à être ressentie comme un retour haptique,
- selon une seconde étape, on génère au moins une impulsion mécanique déphasée par rapport à l'onde mécanique afin d'atténuer cette onde mécanique.

Au cours de la seconde étape, on peut générer plusieurs impulsions mécaniques déphasées par rapport à l'onde mécanique afin d'atténuer cette onde mécanique.

Selon un aspect, un signal de commande d'activation de l'actionneur permettant de générer une impulsion mécanique déphasée est plus court qu'un signal de commande d'activation de l'actionneur permettant d'induire au moins une onde mécanique se propageant sur la surface tactile apte à être ressentie comme un retour haptique.

Selon un autre aspect, le signal de commande d'activation de l'actionneur permettant de générer une impulsion mécanique déphasée est un signal isolé.

Les signaux successif de commande d'activation de l'actionneur permettant de générer une succession d'impulsions mécaniques déphasées sont polarisés notamment de façon opposée en alternance.

Selon encore un autre aspect, l'énergie des impulsions mécaniques déphasées décroît.

Ladite au moins une impulsion mécanique déphasée est par exemple en opposition de phase par rapport à l'onde mécanique.

D'autres avantages et caractéristiques apparaîtront à la lecture de la description des figures suivantes, données à titre d'exemple non limitatif.
- la figure 1 est une vue schématique de côté d'un mode de réalisation d'un module d'interface tactile avec un actionneur,
- la figure 2 est une vue schématique en perspective de l'actionneur de la figure 1,
- la figure 3 est une vue schématique en perspective éclatée de l'actionneur de la figure 2,
- la figure 4 est une vue schématique en coupe longitudinale de l'actionneur de la figure 2,
- la figure 5 est un graphique de signaux de commande appliqués à un actionneur,
- la figure 6 est un organigramme d'un mode de réalisation d'un procédé de génération d'un retour haptique, et
- les figures 7 et 8 montrent des graphiques représentant les oscillations de la surface tactile en fonction du temps, pour deux cas distincts.

Sur toutes les figures les mêmes références s'appliquent aux mêmes éléments.

Sur certaines figures, un repère cartésien X, Y, Z est indiqué afin de mieux comprendre l'orientation des éléments des uns par rapport aux autres. Dans le présent exposé, la direction Z est généralement perpendiculaire à une surface tactile, à condition que celle-ci soit plane et que le plan X - Y soit parallèle au plan de cette surface tactile.

Les réalisations décrites sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

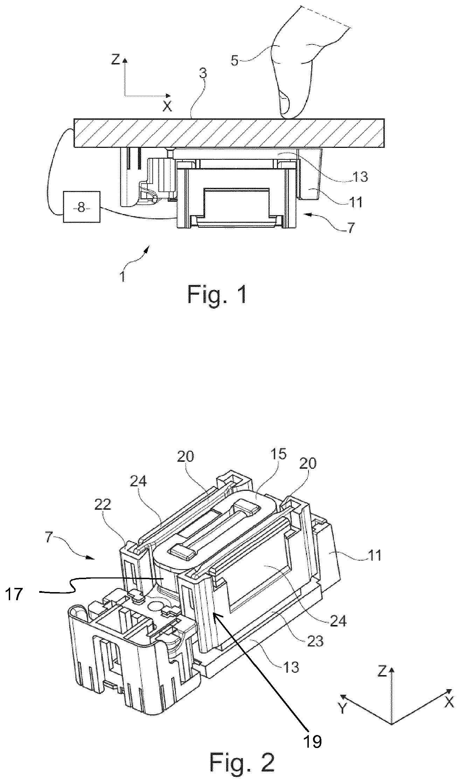

Sur la figure 1 est représenté de façon schématique un mode de réalisation d'un module 1 d'interface tactile à retour haptique comprenant une surface tactile 3 apte à détecter un appui par exemple d'un doigt 5 d'un utilisateur, et au moins un actionneur 7 de retour haptique. Le nombre des actionneurs 7 peut être de deux, trois ou quatre, voire plus et dépend en particulier de la taille de la surface tactile 3.

Le module 1 d'interface tactile à retour haptique, par exemple pour un tableau de commande de véhicule automobile, ou encore pour une console centrale de véhicule automobile, permet de commander des systèmes électriques ou électroniques du véhicule, et peut transmettre un retour haptique à un utilisateur ayant par exemple modifié ou sélectionné une commande de manière à assurer à l'utilisateur la prise en compte de la commande modifiée ou sélectionnée.

La surface tactile 3 peut être plane, mais on peut également envisager des formes galbées ou bombées, voire des formes en creux. La surface tactile 3 est par exemple équipée d'un capteur capacitif ou résistif pour détecter au moins la position du doigt 5 sur la surface tactile 3 et éventuellement de plus le tracé du mouvement du doigt 5 et / ou la pression du doigt 5 exercée sur la surface tactile 3.

Cette détection de la position du doigt 5 est mise en relation par exemple avec un menu d'affichage présentant des pictogrammes et engendre par exemple un signal de commande pour commander divers équipements d'un véhicule comme un système de climatisation, un système audio, un système de téléphonie et autres.

Le mode de réalisation de la figure 1 peut être désigné comme un mode dit "à actionneur suspendu". Par suspendu, on entend que l'actionneur 7 n'est pas relié à un bâti du module d'interface tactile 1, mais seulement attaché à la surface tactile 3.

Bien entendu, on peut également envisager d'autres montages de l'actionneur 7 sans sortir du cadre du présent exposé.

L'actionneur 7 forme donc un bloc fonctionnel bien défini, aisément montable et démontable du module d'interface 1. En effet, ce bloc fonctionnel est simplement vissé ou clipsé à la surface tactile 3, et peut donc être interchangé rapidement. L'actionneur 7 peut éventuellement être collé pour une fixation moins coûteuse au détriment de l'interchangeabilité.

Le module d'interface 1 comprend en outre une unité 8 de traitement et de commande reliée d'une part à la surface tactile 3 et d'autre part à l'actionneur 7.

L'unité 8 de traitement et de commande est par exemple un composant programmable comprenant un processeur, de la mémoire vive et de la mémoire de stockage et permet d'exécuter des instructions d'un logiciel enregistré. Il peut s'agir d'un ASIC pour « application specified integrated circuit » en anglais, c'est-à-dire un circuit intégré spécifique à une application ou encore un équipement programmable du type mini-PC.

L'unité 8 de traitement et de commande peut aussi être connectée à un afficheur non représenté, par exemple un écran d'affichage tel qu'une dalle LED ou LCD, permettant d'afficher des menus de commande de divers équipements du véhicule.

Afin de donner un retour haptique à l'utilisateur dont l'attention ne doit ne pas dévier de la route devant lui, la prise en compte d'une commande est signalée par l'activation de l'actionneur 7 dont le mouvement est transmis à la surface tactile 3.

Sur les figures 2 à 4 est montré un exemple de réalisation d'un actionneur 7, mais d'autres structures ou variantes d'actionneur sont envisageables.

L'actionneur 7 comprend un châssis 11 présentant une paroi de contact 13 qui est fixée contre la surface tactile 3 pour transmettre un retour haptique.

L'actionneur 7 comprend de plus un stator 15 relié au châssis 11 par exemple par des clips. Le stator 15 porte un électroaimant 17, par exemple formé par un bobinage d'un fil électrique, notamment en cuivre.

Le stator 15 entoure un noyau mobile 19 pour pouvoir animer le noyau mobile 19 en translation dans deux sens opposés, perpendiculaires à la paroi de contact 13, selon la direction Z, pour générer le retour haptique. Le noyau mobile 19 comprend notamment des aimants permanents 20 réalisés sous forme de plaquettes. Ces aimants permanents 20 sont montés dans un étrier 22, par exemple en matière plastique et présentant en coupe transversale une forme en « E ».

Les branches de l'étrier 22 portent de plus des plaques métalliques ferromagnétiques 24 pour donner au noyau mobile 19 une masse plus importante afin d'augmenter l'énergie cinétique du noyau mobile 19 et pour concentrer les lignes de champ générés par les aimants permanents 20.

Le noyau mobile 19 est emprisonné entre la paroi de contact 13 et le stator 15 et soumis à la force d'au moins un, dans le présent cas de deux éléments élastiques 21.

Ces éléments élastiques 21 sont dans le présent mode de réalisation par exemple des ressorts, notamment des ressorts hélicoïdaux de poussée, qui sont disposés respectivement sur deux côtés latéraux opposés du noyau mobile 19. Plus précisément, une extrémité de ressort est en appui sur l'étrier 22 et l'autre extrémité est en appui contre le stator 15.

Il est aussi possible d'utiliser un matériau élastique pour les éléments élastiques 21, tel qu'un polymère expansé de type uréthane, un ionomère (polymère réticulé ioniquement), ou du caoutchouc.

La partie centrale annulaire du stator 15 portant les enroulements de l'électroaimant 17 coopère avec les branches de l'étrier 22 en « E », et guide le mouvement en translation selon Z du noyau mobile 19.

L'actionneur 7 peut comporter un amortisseur 23 disposé entre le noyau mobile 19 et la paroi de contact 13.

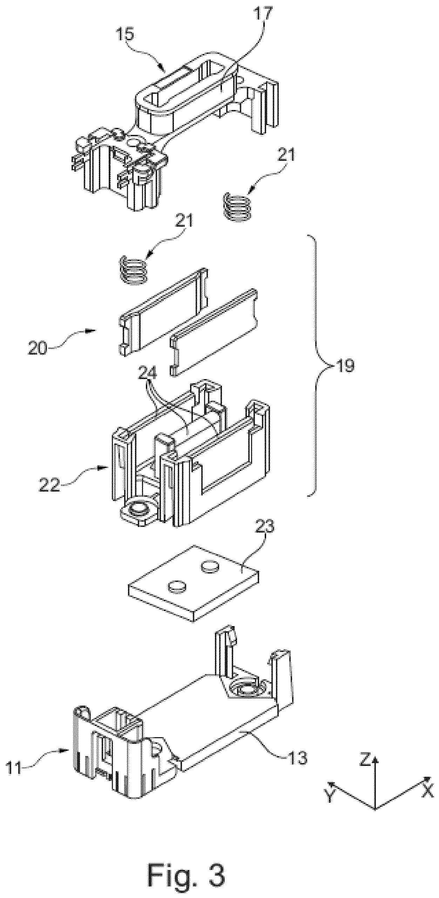

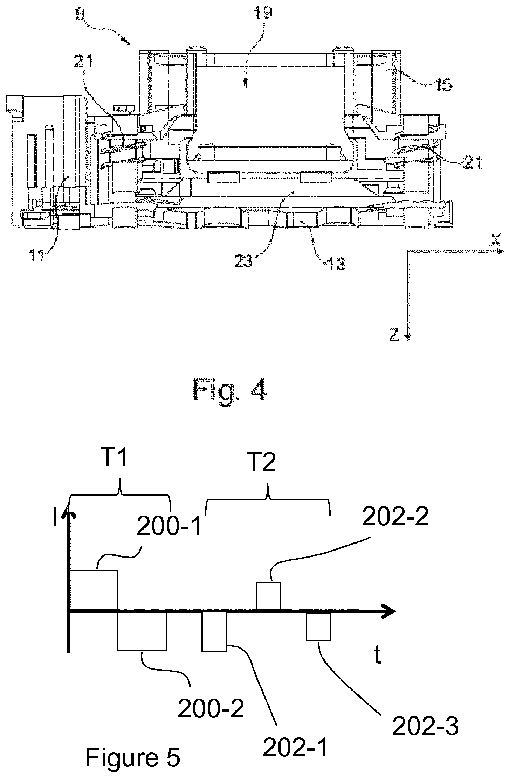

L'amortisseur 23 est par exemple réalisé sous forme d'une couche ou plaquette d'un élastomère, en particulier en silicone, qui peut être surmoulée sur le noyau mobile 19 et/ ou être assemblée sur le noyau mobile 19 par conjugaison de forme comme représenté sur la figure 3. Comme on le voit sur les figures 2 et 4, l'amortisseur 23 est fixé sur le dos de l'étrier 22 en « E ».

Selon une variante non représentée, l'amortisseur 23 est fixé sur la paroi de contact 13. Cependant, il est préférable que l'amortisseur 23 soit fixé au noyau mobile 19 pour augmenter la masse de cet ensemble en mouvement et donc l'énergie cinétique transmise lors de l'impact sur la paroi de contact 13.

L'amortisseur 23 possède notamment une dureté comprise entre 25 et 35, en particulier 30 shore A.

Le ou les élément(s) élastique(s) 21 est / sont dimensionné(s) et sollicités de manière qu'à l'état non alimenté de l'électroaimant 17, le noyau mobile 19 applique une force d'appui en direction de la paroi de contact 13, de sorte que l'amortisseur 23 est poussé contre la paroi de contact 13. A l'état alimenté de l'électroaimant selon une polarisation prédéfinie, le noyau mobile 19 s'écarte de la paroi de contact 13.

La raideur de ressort dudit amortisseur 23 est entre 7,5 et 12,5 fois, notamment 10 fois plus grande que la raideur de ressort dudit élément élastique 21.

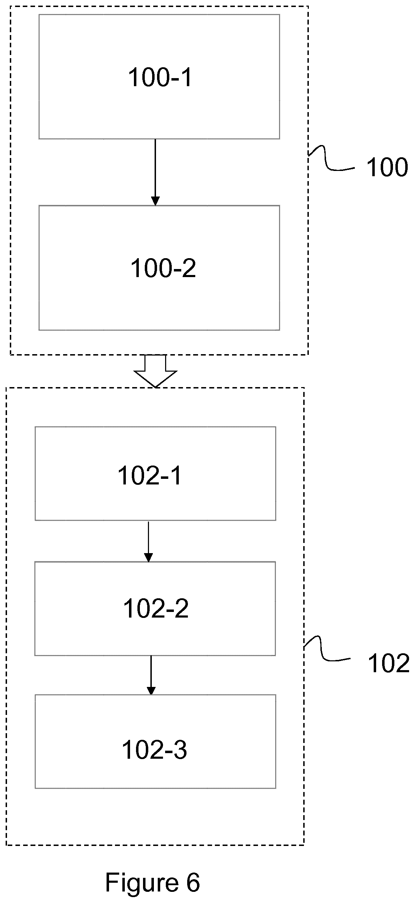

La figure 5 montre un graphique de signaux de commande en fonction du temps appliqués à un actionneur 7 et la figure 6 représente un organigramme d'un procédé de génération d'un retour haptique selon un mode de réalisation.

Selon une première étape 100 pendant la fenêtre de temps T1, à la réception d'un signal de la surface tactile 3 provoqué par un appui d'un doigt 5, l'unité 8 de traitement et de commande envoie par exemple selon une première sous-étape 100-1 un premier signal de commande 200-1. Le premier signal de commande 200-1 présente une première polarisation prédéfinie, par exemple sous forme carrée pour alimenter l'électroaimant 17 en courant dans un premier sens selon la direction Z de manière à écarter le noyau mobile 19 de la paroi de contact 13 du châssis 11 à l'encontre de la force des éléments élastiques 21 (les ressorts de poussée se compriment).

Les éléments élastiques 21 stockent donc dans cette phase une partie de l'énergie cinétique communiquée au noyau mobile 19.

Bien entendu, l'unité 8 peut être configurée pour alimenter l'électroaimant 17 directement en courant. Mais selon une variante, il peut également envoyer un signal de commande par exemple à un relais d'alimentation de l'électroaimant 17.

La durée de ce premier signal de commande 200-1 est suffisamment longue pour que le noyau mobile 19 s'écarte au maximum, par exemple une durée comprise entre 4ms et 6ms, notamment 5ms.

Puis, selon une deuxième sous-étape 100-2, l'unité 8 de traitement et de commande envoie un second signal de commande 200-2 avec une seconde polarisation prédéfinie opposée à la première polarisation, par exemple également de forme carrée. Ce second signal de commande 200-2 inverse le sens du courant pour inverser le champ magnétique de manière à propulser le noyau mobile 19 en direction de la paroi de contact 13 du châssis 11 et maintenir le noyau mobile 19 en appui contre cette paroi de contact 13. Les éléments élastiques 21 assistent dans cette phase le mouvement du noyau mobile 19 (les ressorts de poussée se détendent).

Du fait que le noyau mobile 19 n'effectue ici qu'un aller et un retour, on obtient alors un retour haptique « percutant » comme un impact qui peut facilement être ressenti par le doigt 5 de l'utilisateur.

La durée de ce second signal de commande 200-2 a une durée comprise entre 4ms et 6ms, notamment 5ms.

Bien entendu, les durées des signaux de commande 200-1 et 200-2 peuvent être différentes. On peut aussi envisager des formes de signaux de commande différentes et des amplitudes différentes sans sortir du cadre du présent exposé.

Cette première étape 100 sert donc à activer l'actionneur de retour haptique 7 de façon à induire au moins une onde mécanique se propageant sur la surface tactile 3 apte à être ressentie comme un retour haptique.

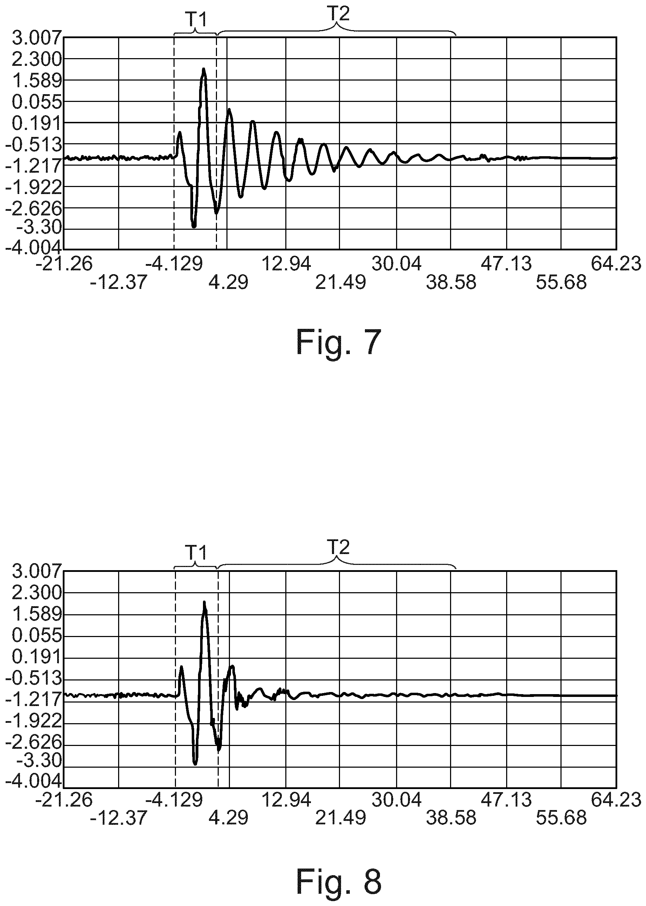

La figure 7 montre les oscillations sur la surface tactile 3 dans le cas où on réalise uniquement cette première étape 100.

Comme on peut le constater, on voit d'une part dans la fenêtre de temps T1 un signal qui correspond à l'onde mécanique induite par l'étape 100 et d'autre part dans la fenêtre de temps T2 un signal correspondant l'onde mécanique évanescente dont l'amplitude diminue petit à petit et qui peut être gênante.

On vise donc à atténuer, si possible très fortement, cette onde mécanique évanescente.

Pour ce faire, lors d'une seconde étape 102 pendant une fenêtre de temps T2, on active l'actionneur de retour haptique 7 de façon à générer au moins une impulsion mécanique déphasée, dans le présent cas trois impulsions mécaniques déphasées par rapport à l'onde mécanique afin d'atténuer cette onde mécanique. Le déphasage est notamment en opposition de phase pour obtenir une atténuation maximale.

A cet effet, l'unité 8 de traitement et de commande, envoie par exemple selon une première sous-étape 102-1, un premier signal 202-1 avec la seconde polarisation prédéfinie, par exemple sous forme carrée pour alimenter l'électroaimant 17 en courant dans le second sens selon la direction Z de manière à appuyer le noyau mobile 19 avec l'amortisseur 23 contre la paroi de contact 13. Comme on peut le constater, le premier signal de commande 202-1 possède la même polarisation et la même amplitude que le second signal de commande 200-2, mais il est plus court que ce dernier, par exemple entre 1,5ms et 3ms, typiquement 2ms.

On constate aussi que le signal de commande 202-1 est isolé, c'est-à-dire que juste avant et après le signal de commande 202-1, l'actionneur 7 n'est pas alimenté.

Puis selon une deuxième sous-étape 102-2, un second signal de commande 202-2 avec la première polarisation prédéfinie est envoyé à l'électroaimant 17, ce qui a pour effet d'écarter le noyau mobile 19 de la paroi de contact 13 du châssis 11 à l'encontre de la force des éléments élastiques 21, mais moins loin que lors de la première sous-étape 100-1 étant donné que le signal de commande 202-2 possède une amplitude plus faible. Le signal de commande 202-2 possède donc une polarisation inversée par rapport au signal de commande 202-1 et une amplitude plus faible en valeur absolue que le signal de commande 202-1. Le signal de commande 202-2 est également un signal isolé.

Enfin selon une troisième sous-étape 102-3, un troisième signal 202-3 avec la seconde polarisation prédéfinie est envoyé à l'électroaimant 17, ce qui a pour effet d'appuyer le noyau mobile 19 avec l'amortisseur 23 contre la paroi de contact 13. Comme on peut le constater, le signal de commande 202-3 possède la même polarisation mais une amplitude plus faible que le signal de commande 202-1. Le signal de commande 202-3 est également un signal isolé.

On constate donc que les signaux de commande 202-1, 202-2 et 202-3 sont des impulsions polarisées de façon opposée et en alternance et que leur énergie, qui correspond à l'aire des impulsions, décroît.

L'effet des signaux de commande 202-1, 202-3 et 202-3 de la deuxième étape 102 sur l'onde mécanique évanescente est montré sur la figure 8. Par rapport à la figure 7, on voit clairement que le signal correspondant à l'onde mécanique évanescente est fortement diminué.

Pour un utilisateur, le retour haptique apparaît donc plus percutant et plus court.

On comprend donc que les impulsions mécaniques déphasées permettent d'avoir un retour haptique plus franc et donc mieux ressenti par l'utilisateur.

La position des signaux de commande 202-1, 202-2 et 202-3 dépend naturellement de divers paramètres comme par exemple de la taille de la surface tactile 3, du matériau de la surface tactile 3, de la suspension de la surface tactile 3 etc.

On peut obtenir la position dans le temps des signaux de commande 202-1, 202-2 et 202-3 et leurs amplitudes pour une configuration donnée d'un module d'interface 1 à retour haptique de façon itérative de la façon suivante :
On place par exemple un accéléromètre sur la surface tactile 3 pour pouvoir mesurer le ou les ondes mécaniques sur la surface tactile 3 et on branche la sortie de l'accéléromètre sur un oscilloscope.

Puis on réalise la première étape 100 pour induire une onde mécanique sur la surface tactile 3 et on obtient un graphe similaire à celui de la figure 7.

Ensuite, un premier signal de commande 202-1 est envoyé pour alimenter l'électroaimant 17 et générer une première impulsion mécanique 202-1 en opposition de phase avec l'onde mécanique induite par la première étape 100.

On constate l'atténuation de l'onde mécanique pour déterminer la nouvelle position temporelle des ventres de l'onde mécanique. Puis, on alimente l'électroaimant 17 avec le second signal de commande 202-2 en plaçant ce second signal 202-2 par rapport à la position temporelle des ventres de l'onde mécanique constatée précédemment de façon à être en opposition de phase avec l'onde mécanique évanescente. On constate à nouveau l'effet d'atténuation de l'onde mécanique induit par les deux signaux de commande 202-1 et 202-2 pour déterminer la nouvelle position temporelle des ventres de l'onde mécanique. On recommence en alimentant l'électroaimant 17 avec le troisième signal de commande 202-3 en plaçant ce troisième signal 202-3 par rapport à la position temporelle des ventres de l'ondes mécanique constatée précédemment de façon à être en opposition de phase avec l'onde mécanique évanescente.

Une fois les valeurs et la position temporelle des impulsions des signaux de commande identifiées, on peut les programmer comme instructions de commande dans une des mémoires de l'unité 8 de traitement et de commande.

On comprend donc que l'excitation spécifique de l'actionneur 7 pendant la fenêtre de temps T2 permet de diminuer fortement les ondes mécaniques évanescentes sur la surface tactile 3 et de rendre ainsi le retour haptique mieux perceptible par l'utilisateur.

Par ailleurs, dans le cas d'une surface tactile 3 équipée avec plusieurs actionneurs 7, il suffit généralement d'activer un seul actionneur 7 pendant la fenêtre de temps T2 pour obtenir une atténuation satisfaisante de l'onde mécanique évanescente.

Cependant, on peut également prévoir d'activer aussi plusieurs actionneurs 7 pendant T2, ou alors d'actionner les actionneurs 7 à tour de rôle, par exemple un pour le signal de commande 202-1, un autre pour le signal de commande 202-2 et un troisième pour le signal de commande 202-3. Bien entendu, d'autres variantes sont envisageables sans sortir du cadre du présent exposé. Ainsi l'électroaimant 17 peut être porté par le noyau mobile 19 et l'aimant permanent 20 par le stator pour une configuration « voice-coil » ou bobine acoustique.

## Revendications

1. Module d'interface (1) tactile à retour haptique, comprenant :
- une surface tactile (3) apte à détecter au moins une caractéristique d'un appui d'un utilisateur,
- au moins un actionneur de retour haptique (7) configuré pour transmettre un retour haptique à la surface tactile (3), ledit au moins un actionneur (7) comportant :
- un châssis (11) destiné à être en contact avec l'interface tactile (3) par une paroi de contact (13) pour transmettre un retour haptique à la surface tactile (3),
- un stator (15) relié au châssis (11),
- un noyau mobile (19) relié par au moins un élément élastique (21) au châssis (11) et destiné à être entraîné en mouvement par le stator (15) pour générer le retour haptique,
- un électroaimant (17) et au moins un aimant permanent (20) dont l'un est porté par le stator (15) et l'autre par le noyau mobile (19), et un amortisseur (23) disposé entre le noyau mobile (19) et la paroi de contact (13)
- une unité (8) de traitement et de commande reliée d'une part à la surface tactile (3) et d'autre part audit au moins un actionneur (7), (8) de traitement et de commande étant configurée de manière à activer (100) l'actionneur de retour haptique (7) dans une première fenêtre de temps (T1) de façon à induire au moins une onde mécanique se propageant sur la surface tactile (3) apte à être ressentie comme un retour haptique,
**caractérisé en ce que**:
l'unité (8) de traitement et de commande (100) de l'actionneur de retour haptique (7) est configurée à produire dans ladite première fenêtre de temps (Tl) une commande comportant :
- un premier signal de commande (200- 1) présentant une première polarisation pour alimenter l'électroaimant (17) en courant dans un premier sens de manière à écarter le noyau mobile (19) de la paroi de contact (13) du châssis 11 à l'encontre de la force des éléments élastiques (21),
- puis, un second signal de commande (200 -2) avec une seconde polarisation prédéfinie opposée à la première polarisation, ce second signal de commande (200 -2) inversant le sens du courant pour inverser le champ magnétique de manière à propulser le noyau mobile (19) en direction de la paroi de contact 13 du châssis 11 et maintenir le noyau mobile 19 en appui contre cette paroi de contact 13,
de sorte que le noyau mobile (19) n'effectue qu'un aller et un retour; et l'unité de traitement et de commande de l'actionneur de retour haptique est configuée à produire dans une seconde fenêtre de temps (T2) au moins un signal de commande de façon à générer (102) au moins une impulsion mécanique déphasée (202-1, 202-2, 202-3) par rapport à l'onde mécanique afin d'atténuer cette onde mécanique.

2. Module d'interface (1) selon la revendication 1, **caractérisé en ce que** l'unité (8) de traitement et de commande est configurée à générer plusieurs signaux successifs de commande dans la seconde fenêtre de temps (T2) de manière à activer l'actionneur de retour haptique (7) dans la seconde fenêtre de temps (T₂) de façon à générer plusieurs impulsions mécaniques déphasées (202-1, 202-2, 202-3) par rapport à l'onde mécanique afin d'atténuer cette onde mécanique.

3. Module d'interface (1) selon la revendication 2, **caractérisé en ce que** le au moins un signal de commande envoyé par l'unité (8) de traitement et de commande pour activer l'actionneur (7) et générer une impulsion mécanique déphasée (202-1, 202-2, 202-3) est plus court que les signaux de de commande (200-1, 200-2) dans la première fenêtre de temps (T1).

4. Module d'interface (1) selon la revendication 3, **caractérisé en ce que** le au moins un signal de commande d'activation de l'actionneur (7) permettant de générer une impulsion mécanique déphasée (202-1, 202-2, 202-3) est un signal isolé.

5. Module d'interface (1) selon la revendication 2, **caractérisé en ce que** les signaux successifs (202-1, 202-2, 202-3) de commande d'activation de l'actionneur (7) permettant de générer une succession d'impulsions mécaniques déphasées sont polarisés de façon opposée en alternance.

6. Module d'interface (1) selon la revendication 5, **caractérisé en ce que** l'énergie des impulsions mécaniques déphasées (202-1, 202-2, 202-3) décroît.

7. Module d'interface (1) selon la revendication 1, **caractérisé en ce que** ladite au moins une impulsion mécanique déphasée (202-1, 202-2, 202-3) est en opposition de phase par rapport à l'onde mécanique.

8. Module d'interface (1) selon l'une quelconque des revendications précédentes, **caractérisé en ce que** ledit élément élastique (21) est dimensionné de manière qu'à l'état non alimenté de l'électroaimant (17), le noyau mobile (19) applique une force d'appui en direction de la paroi de contact (13) et qu'à l'état alimenté de l'électroaimant (17) selon une polarisation prédéfinie, le noyau mobile (19) s'écarte de la paroi de contact (13).

9. Module d'interface (1) selon l'une quelconque des revendications précédentes, **caractérisé en ce que** la raideur de ressort dudit amortisseur (23) est entre 7,5 et 12,5 fois, notamment 10 fois plus grande que la raideur de ressort dudit élément élastique (21).

10. Module d'interface (1) selon l'une quelconque des revendications précédentes, **caractérisé en ce que** ledit amortisseur (23) est réalisé sous forme d'une couche d'un élastomère, en particulier en silicone.

11. Module d'interface (1) selon l'une quelconque des revendications précédentes, **caractérisé en ce que** l'amortisseur (23) possède une dureté comprise entre 25 et 35, en particulier 30 shore A.

12. Procédé de génération d'un retour haptique dans un module d'interface (1) tactile à retour haptique comprenant une surface tactile (3) apte à détecter un appui d'un utilisateur selon l'une quelconque des revendications 1 à 11, **caractérisé en ce qu'**il comporte les étapes suivantes:
- produire par l'unité de traitement et de commande de l'actionneur de retour haptique dans une première fenêtre de temps (T1) une commande comportant un premier signal de commande présentant une première polarisation pour alimenter l'électroaimant en courant dans un premier sens de manière à écarter le noyau mobile de la paroi de contact du châssis à l'encontre de la force des éléments élastiques, puis, un second signal de commande avec une seconde polarisation prédéfinie opposée à la première polarisation, ce second signal de commande inversant le sens du courant pour inverser le champ magnétique de manière à propulser le noyau mobile en direction de la paroi de contact du châssis et maintenir le noyau mobile en appui contre cette paroi de contact, de sorte que le noyau mobile n'effectue qu'un aller et un retour, de façon à induire au moins une onde mécanique se propageant sur la surface tactile apte à être ressentie comme un retour haptique;
- produire, dans une seconde fenêtre de temps (T2), au moins un signal de commande de l'activation de l'actionneur permettant de générer au moins une impulsion mécanique déphasée par rapport à l'onde mécanique afin d'atténuer cette onde mécanique.

13. Procédé selon la revendication 12, dans lequel au cours de la seconde étape, on génère plusieurs impulsions mécaniques déphasées (202-1, 202-2, 202-3) par rapport à l'onde mécanique afin d'atténuer cette onde mécanique.

14. Procédé selon la revendication 12, **caractérisé en ce que** le au moins signal de commande d'activation de l'actionneur (7) permettant de générer l'impulsion mécanique déphasée (202-1, 202-2, 202-3) est plus court que les signaux (200-1,200-2)dans la première fenêtre de temps (T1) .

15. Procédé selon la revendication 14, **caractérisé en ce que** le signal de commande d'activation de l'actionneur (7) permettant de générer l'impulsion mécanique déphasée (202-1, 202-2, 202-3) est un signal isolé.

16. Procédé selon la revendication 12, **caractérisé en ce que** le signal de commande de l'actionneur permettant de générer l'impulsion mécanique déphasée comporte des signaux successifs de commande d'activation de l'actionneur (7) permettant de générer une succession d'impulsions mécaniques déphasées (202-1, 202-2, 202-3) polarisés de façon opposée en alternance.

17. Procédé selon la revendication 16, **caractérisé en ce que** l'énergie des impulsions mécaniques déphasées (202-1, 202-2, 202-3) décroît.

18. Procédé selon la revendication 12, **caractérisé en ce que** ladite au moins une impulsion mécanique déphasée (202-1, 202-2, 202-3) est en opposition de phase par rapport à l'onde mécanique.

## Patentansprüche

1. Berührungsschnittstellenmodul (1) mit haptischer Rückmeldung, das enthält:
- eine Berührungsfläche (3), die mindestens ein Merkmal eines Drückens durch einen Benutzer erfassen kann,
- mindestens einen Aktor einer haptischen Rückmeldung (7), der konfiguriert ist, eine haptische Rückmeldung an die Berührungsfläche (3) zu übertragen, wobei der mindestens eine Aktor (7) aufweist:
- einen Gestellrahmen (11), der dazu bestimmt ist, mit der Berührungsschnittstelle (3) durch eine Kontaktwand (13) in Kontakt zu sein, um eine haptische Rückmeldung an die Berührungsfläche (3) zu übertragen,
- einen mit dem Gestellrahmen (11) verbundenen Stator (15),
- einen beweglichen Kern (19), der durch mindestens ein elastisches Element (21) mit dem Gestellrahmen (11) verbunden und dazu bestimmt ist, vom Stator (15) in Bewegung versetzt zu werden, um die haptische Rückmeldung zu erzeugen,
- einen Elektromagnet (17) und mindestens einen Dauermagnet (20), von denen der eine vom Stator (15) und der andere vom beweglichen Kern (19) getragen wird, und
- einen Dämpfer (23), der zwischen dem beweglichen Kern (19) und der Kontaktwand (13) angeordnet ist,
- eine Verarbeitungs- und Steuereinheit (8), die einerseits mit der Berührungsfläche (3) und andererseits mit dem mindestens einen Aktor (7) verbunden ist, wobei die Verarbeitungs- und Steuereinheit (8) konfiguriert ist, den Aktor der haptischen Rückmeldung (7) in einem ersten Zeitfenster (T1) zu aktivieren (100), um mindestens eine sich an der Berührungsfläche (3) ausbreitende mechanische Welle zu induzieren, die wie eine haptische Rückmeldung empfunden werden kann,
**dadurch gekennzeichnet, dass**:
die Verarbeitungs- und Steuereinheit (8) (100) des Aktors der haptischen Rückmeldung (7) konfiguriert ist, im ersten Zeitfenster (T1) eine Steuerung zu erzeugen, die aufweist:
- ein erstes Steuersignal (200-1), das eine erste Polarisation aufweist, um den Elektromagnet (17) in einer ersten Richtung mit Strom zu speisen, um den beweglichen Kern (19) gegen die Wirkung der Kraft der elastischen Elemente (21) von der Kontaktwand (13) des Gestellrahmens (11) zu entfernen,
- dann ein zweites Steuersignal (200-2) mit einer zweiten vordefinierten Polarisation entgegengesetzt zur ersten Polarisation, wobei dieses zweite Steuersignal (200-2) die Richtung des Stroms umkehrt, um das Magnetfeld umzukehren, um den beweglichen Kern (19) in Richtung der Kontaktwand (13) des Gestellrahmens (11) anzutreiben und den beweglichen Kern (19) in Auflage gegen diese Kontaktwand (13) zu halten,
so dass der bewegliche Kern (19) nur eine Hin- und Herbewegung ausführt;
und die Verarbeitungs- und Steuereinheit des Aktors der haptischen Rückmeldung konfiguriert ist, in einem zweiten Zeitfenster (T2) mindestens ein Steuersignal zu erzeugen, um mindestens einen bezüglich der mechanischen Welle phasenverschobenen mechanischen Impuls (202-1, 202-2, 202-3) zu generieren (102), um diese mechanische Welle zu dämpfen.

2. Schnittstellenmodul (1) nach Anspruch 1, **dadurch gekennzeichnet, dass** die Verarbeitungs- und Steuereinheit (8) konfiguriert ist, im zweiten Zeitfenster (T2) mehrere aufeinanderfolgende Steuersignale zu generieren, um den Aktor der haptischen Rückmeldung (7) im zweiten Zeitfenster (T2) zu aktivieren, um mehrere bezüglich der mechanischen Welle phasenverschobene mechanische Impulse (202-1, 202-2, 202-3) zu generieren, um diese mechanische Welle zu dämpfen.

3. Schnittstellenmodul (1) nach Anspruch 2, **dadurch gekennzeichnet, dass** das von der Verarbeitungs- und Steuereinheit (8) gesendete mindestens eine Steuersignal zur Aktivierung des Aktors (7) und Generierung eines phasenverschobenen mechanischen Impulses (202-1, 202-2, 202-3) kürzer ist als die Steuersignale (200-1, 200-2) im ersten Zeitfenster (T1).

4. Schnittstellenmodul (1) nach Anspruch 3, **dadurch gekennzeichnet, dass** das mindestens eine Steuersignal zur Aktivierung des Aktors (7), das es ermöglicht, einen phasenverschobenen mechanischen Impuls (202-1, 202-2, 202-3) zu generieren, ein isoliertes Signal ist.

5. Schnittstellenmodul (1) nach Anspruch 2, **dadurch gekennzeichnet, dass** die aufeinanderfolgenden Steuersignale (202-1, 202-2, 202-3) zur Aktivierung des Aktors (7), die es ermöglichen, eine Folge phasenverschobener mechanischer Impulse zu generieren, abwechselnd entgegengesetzt polarisiert sind.

6. Schnittstellenmodul (1) nach Anspruch 5, **dadurch gekennzeichnet, dass** die Energie der phasenverschobenen Impulse (202-1, 202-2, 202-3) abnimmt.

7. Schnittstellenmodul (1) nach Anspruch 1, **dadurch gekennzeichnet, dass** der mindestens eine phasenverschobene mechanische Impuls (202-1, 202-2, 202-3) bezüglich der mechanischen Welle in Gegenphase ist.

8. Schnittstellenmodul (1) nach einem der vorhergehenden Ansprüche, **dadurch gekennzeichnet, dass** das elastische Element (21) so bemessen ist, dass im nicht gespeisten Zustand des Elektromagnets (17) der bewegliche Kern (19) eine Auflagekraft in Richtung der Kontaktwand (13) anwendet, und dass im gemäß einer vordefinierten Polarisation gespeisten Zustand des Elektromagnets (17) der bewegliche Kern (19) sich von der Kontaktwand (13) entfernt.

9. Schnittstellenmodul (1) nach einem der vorhergehenden Ansprüche, **dadurch gekennzeichnet, dass** die Federsteifigkeit des Dämpfers (23) zwischen 7,5 und 12,5 mal, insbesondere 10 mal größer ist als die Federsteifigkeit des elastischen Elements (21).

10. Schnittstellenmodul (1) nach einem der vorhergehenden Ansprüche, **dadurch gekennzeichnet, dass** der Dämpfer (23) in Form einer Schicht eines Elastomermaterials, insbesondere aus Silikon, hergestellt wird.

11. Schnittstellenmodul (1) nach einem der vorhergehenden Ansprüche, **dadurch gekennzeichnet, dass** der Dämpfer (23) eine Härte von zwischen 25 und 35, insbesondere 30 Shore A besitzt.

12. Verfahren zur Generierung einer haptischen Rückmeldung in einem Berührungsschnittstellenmodul (1) mit haptischer Rückmeldung, das eine Berührungsfläche (3) enthält, die fähig ist, ein Drücken eines Benutzers zu erfassen, nach einem der Ansprüche 1 bis 11, **dadurch gekennzeichnet, dass** es die folgenden Schritte aufweist:
- Erzeugen, durch die Verarbeitungs- und Steuereinheit des Aktors der haptischen Rückmeldung, in einem ersten Zeitfenster (T1) einer Steuerung, die ein erstes Steuersignal, das eine erste Polarisation aufweist, um den Elektromagnet in einer ersten Richtung mit Strom zu speisen, um den beweglichen Kern gegen die Kraft der elastischen Elemente von der Kontaktwand des Gestellrahmens zu entfernen, dann ein zweites Steuersignal mit einer zweiten vordefinierten Polarisation entgegengesetzt zur ersten Polarisation aufweist, wobei dieses zweite Steuersignal die Richtung des Stroms umkehrt, um das Magnetfeld umzukehren, um den beweglichen Kern in Richtung der Kontaktwand des Gestellrahmens anzutreiben und den beweglichen Kern in Auflage gegen diese Kontaktwand zu halten, damit der bewegliche Kern nur eine Hin- und Herbewegung ausführt, um mindestens eine sich an der Berührungsfläche ausbreitende mechanische Welle zu induzieren, die als eine haptische Rückmeldung empfunden werden kann;
- Erzeugen, in einem zweiten Zeitfenster (T2), mindestens eines Steuersignals der Aktivierung des Aktors, das es ermöglicht, mindestens einen bezüglich der mechanischen Welle phasenverschobenen mechanischen Impuls zu generieren, um diese mechanische Welle zu dämpfen.

13. Verfahren nach Anspruch 12, wobei während des zweiten Schritts mehrere bezüglich der mechanischen Welle phasenverschobene mechanische Impulse (202-1, 202-2, 202-3) generiert werden, um diese mechanische Welle zu dämpfen.

14. Verfahren nach Anspruch 12, **dadurch gekennzeichnet, dass** das mindestens eine Steuersignal zur Aktivierung des Aktors (7), das es ermöglicht, den phasenverschobenen mechanischen Impuls (202-1, 202-2, 202-3) zu generieren, kürzer ist als die Signale (200-1, 200-2) im ersten Zeitfenster (T1).

15. Verfahren nach Anspruch 14, **dadurch gekennzeichnet, dass** das Steuersignal zur Aktivierung des Aktors (7), das es ermöglicht, den phasenverschobenen mechanischen Impuls (202-1, 202-2, 202-3) zu generieren, ein isoliertes Signal ist.

16. Verfahren nach Anspruch 12, **dadurch gekennzeichnet, dass** das Steuersignal des Aktors, das es ermöglicht, den phasenverschobenen mechanischen Impuls zu generieren, aufeinanderfolgende Steuersignale der Aktivierung des Aktors (7) aufweist, die es ermöglichen, eine Folge phasenverschobener mechanischer Impulse (202-1, 202-2, 202-g) zu generieren, die abwechselnd entgegengesetzt polarisiert sind.

17. Verfahren nach Anspruch 16, **dadurch gekennzeichnet, dass** die Energie der phasenverschobenen mechanischen Impulse (202-1, 202-2, 202-3) abnimmt.

18. Verfahren nach Anspruch 12, **dadurch gekennzeichnet, dass** der mindestens eine phasenverschobene mechanische Impuls (202-1, 202-2, 202-3) bezüglich der mechanischen Welle in Gegenphase ist.

## Claims

1. Haptic-feedback-providing touch-interface module (1), comprising:
- a touch surface (3) that is able to detect at least one characteristic of a press of a user;
- at least one haptic-feedback actuator (7) that is configured to transmit haptic feedback to the touch surface (3), said at least one actuator (7) comprising:
- a chassis (11) that is intended to make contact with the touch interface (3) via a contact wall (13) in order to transmit haptic feedback to the touch surface (3),
- a stator (15) that is connected to the chassis (11) ,
- a movable core (19) that is connected, via at least one elastic element (21), to the chassis (11) and that is intended to be driven to move by the stator (15) in order to generate the haptic feedback,
- an electromagnet (17) and at least one permanent magnet (20), one of which is borne by the stator (15) and the other of which is borne by the movable core (19), and
- a damper (23) that is placed between the movable core (19) and the contact wall (13);
- a controlling and processing unit (8) that is connected, on the one hand, to the touch surface (3), and, on the other hand, to said at least one actuator (7), the controlling and processing unit (8) being configured so as to activate (100) the haptic-feedback actuator (7) in a first time window (T1) so as to induce at least one mechanical wave that propagates over the touch surface (3) and that is able to be felt as haptic feedback,
**characterized in that**:
the controlling and processing unit (8), which is used to control (100) the haptic-feedback actuator (7), is configured to produce, in said first time window (T1), a command comprising:
- a first control signal (200-1) having a first bias in order to supply the electromagnet (17) with current in a first direction so as to separate the movable core (19) from the contact wall (13) of the chassis (11) against the force of the elastic elements (21),
- then, a second control signal (200-2) with a second predefined bias opposite the first bias, this second control signal (200-2) inverting the direction of the current in order to invert the magnetic field so as to propel the movable core (19) in the direction of the contact wall (13) of the chassis (11) and to maintain the movable core (19) in abutment against this contact wall (13), so that the movable core (19) makes only one round-trip;
and the controlling and processing unit, which controls the haptic-feedback actuator, is configured to produce, in a second time window (T2), at least one control signal so as to generate (102) at least one mechanical pulse (202-1, 202-2, 202-3) that is out of phase with respect to the mechanical wave in order to attenuate this mechanical wave.

2. Interface module (1) according to Claim 1, **characterized in that** the controlling and processing unit (8) is configured to generate a plurality of successive control signals in the second time window (T2) so as to activate the haptic-feedback actuator (7) in the second time window (T2) so as to generate a plurality of mechanical pulses (202-1, 202-2, 202-3) that are out of phase with respect to the mechanical wave in order to attenuate this mechanical wave.

3. Interface module (1) according to Claim 2, **characterized in that** the at least one control signal transmitted by the controlling and processing unit (8) in order to activate the actuator (7) and generate an out-of-phase mechanical pulse (202-1, 202-2, 202-3) is shorter than the control signals (200-1, 200-2) in the first time window (T1).

4. Interface module (1) according to Claim 3, **characterized in that** the at least one control signal for controlling activation of the actuator (7) allowing an out-of-phase mechanical pulse (202-1, 202-2, 202-3) to be generated is an isolated signal.

5. Interface module (1) according to Claim 2, **characterized in that** the successive signals (202-1, 202-2, 202-3) for controlling activation of the actuator (7) allowing a succession of out-of-phase mechanical pulses to be generated are biased oppositely in alternation.

6. Interface module (1) according to Claim 5, **characterized in that** the energy of the out-of-phase mechanical pulses (202-1, 202-2, 202-3) decreases.

7. Interface module (1) according to Claim 1, **characterized in that** said at least one out-of-phase mechanical pulse (202-1, 202-2, 202-3) is in phase opposition with respect to the mechanical wave.

8. Interface module (1) according to any one of the preceding claims, **characterized in that** said elastic element (21) is dimensioned so that, in the unenergized state of the electromagnet (17), the movable core (19) applies a bearing force in the direction of the contact wall (13), and so that, in the state in which the electromagnet (17) is energized with a predefined bias, the movable core (19) separates from the contact wall (13) .

9. Interface module (1) according to any one of the preceding claims, **characterized in that** the spring constant of said damper (23) is between 7.5 and 12.5 times and in particular 10 times higher than the spring constant of said elastic element (21).

10. Interface module (1) according to any one of the preceding claims, **characterized in that** said damper (23) takes the form of a layer of an elastomer, a silicone layer in particular.

11. Interface module (1) according to any one of the preceding claims, **characterized in that** the damper (23) has a hardness comprised between 25 and 35, and in particular of 30 shore A.

12. Method for generating haptic feedback in a haptic-feedback-providing touch-interface module (1) comprising a touch surface (3) that is able to detect a press of a user and according to any one of Claims 1 to 11,
**characterized in that** it comprises the following steps:
- producing, with the controlling and processing unit, which controls the haptic feedback actuator, in a first time window (T1), a command comprising a first signal having a first bias in order to supply the electromagnet with current in a first direction so as to separate the movable core from the contact wall of the chassis against the force of the elastic elements, then, a second control signal with a second predefined bias opposite the first bias, this second control signal inverting the direction of the current in order to invert the magnetic field so as to propel the movable core in the direction of the contact wall of the chassis and to maintain the movable core in abutment against this contact wall, so that the movable core makes only one round-trip, so as to induce at least one mechanical wave that propagates over the touch surface and that is able to be felt as haptic feedback;
- producing, in a second time window (T2), at least one control signal for controlling the activation of the actuator, allowing at least one mechanical pulse that is out of phase with respect to the mechanical wave to be generated in order to attenuate this mechanical wave.

13. Method according to Claim 12, wherein, in the second step, a plurality of mechanical pulses (202-1, 202-2, 202-3) that are out of phase with respect to the mechanical wave are generated in order to attenuate this mechanical wave.

14. Method according to Claim 12, **characterized in that** the at least one control signal for controlling the activation of the actuator (7) allowing the out-of-phase mechanical pulse (202-1, 202-2, 202-3) to be generated is shorter than the signals (200-1, 200-2) in the first time window (T1).

15. Method according to Claim 14, **characterized in that** the signal for controlling activation of the actuator (7) allowing the out-of-phase mechanical pulse (202-1, 202-2, 202-3) to be generated is an isolated signal.

16. Method according to Claim 12, **characterized in that** the control signal for controlling the actuator allowing the out-of-phase mechanical pulse to be generated comprises successive signals for controlling activation of the actuator (7) allowing a succession of out-of-phase mechanical pulses (202-1, 202-2, 202-3) that are biased oppositely in alternation to be generated.

17. Method according to Claim 16, **characterized in that** the energy of the out-of-phase mechanical pulses (202-1, 202-2, 202-3) decreases.

18. Method according to Claim 12, **characterized in that** said at least one out-of-phase mechanical pulse (202-1, 202-2, 202-3) is in phase opposition with respect to the mechanical wave.
